# EUROPÄISCHE PATENTSCHRIFT

(11) **EP 0 904 160 B1**
(45) Veröffentlichungstag und Bekanntmachung des Hinweises auf die Patenterteilung: **20.08.2003**
(21) Anmeldenummer: 97927139.2
(22) Anmeldetag: 05.06.1997
(51) Int. Cl.: B05D 7/16, B05D 7/00

(54) **VERFAHREN ZUR HERSTELLUNG VON MEHRSCHICHTLACKIERUNGEN AUF ELEKTRISCH LEITFÄHIGEN SUBSTRATEN**
PROCESS FOR PRODUCING MULTI-COAT PAINTS ON ELECTRICALLY CONDUCTIVE SUBSTRATES
PROCEDE PERMETTANT DE REALISER DES MISES EN PEINTURE MULTICOUCHE SUR DES SUBSTRATS ELECTRIQUES

(30) Priorität: 12.06.1996 DE 19623372
(43) Veröffentlichungstag der Anmeldung: 31.03.1999
(73) Patentinhaber: E.I. DU PONT DE NEMOURS AND COMPANY, Wilmington Delaware 19898 (US)
(72) Erfinder: WETZEL, Kornelia, D-42329 Wuppertal (DE); BOLLENBERG, Ingrid, D-42329 Wuppertal (DE); DÖSSEL, Karl-Friedrich, D-42107 Wuppertal (DE); JÖLLENBECK, Manfred, D-42327 Wuppertal (DE); WINDMANN, Reinhard, D-42279 Wuppertal (DE); KEGEL, Heinz-Günter, D-42389 Wuppertal (DE)
(74) Vertreter: Hrabal, Ulrich, Dr.
(86) Internationale Anmeldenummer: EP9702920
(87) Internationale Veröffentlichungsnummer: WO97047401

(56) Entgegenhaltungen:
- DE-A- 19 529 394
- DE-A- 19 541 461

## Beschreibung

Die Erfindung betrifft ein Verfahren zur Herstellung einer mehrschichtigen Lackierung elektrisch leitfähiger, z.B. metallischer, Substrate, insbesondere zur Kraftfahrzeuglackierung.

Heutige, hochwertige Kraftfahrzeugserienlackierungen bestehen im allgemeinen aus einer elektrophoretisch aufgebrachten vor Korrosion und Steinschlag schützenden Grundierung, einer nachfolgenden vor Steinschlag schützenden und die Oberfläche glättenden Füllerschicht und einer anschließend aufgebrachten dekorativen Zwecken dienenden Zweischichtlackierung aus einer abhängig vom jeweiligen Farbton in einem oder mehreren Spritzgängen applizierten farb- und/oder effektgebenden Basislackschicht und einer darauf naß-in-naß applizierten, die Oberfläche versiegelnden schützenden Klarlackschicht.

Die EP-A-0 265 363 beschreibt ein Verfahren zur Vermeidung der Vergilbung einer Mehrschichtlackierung, wobei eine Grundierung in Form eines eingebrannten kathodischen Tauchlacks, welcher als Vernetzer spezielle blockierte Polyisocyanate enthält, mit einem handelsüblichen pigmentierten Basislack und einem handelsüblichen Klarlack im Naß-in-Naß-Verfahren überlackiert wird. Eine Füllerschicht entfällt. Es hat sich im Rahmen der vorliegenden Erfindung gezeigt, daß die direkte Überlackierung einer eingebrannten Elektrotauchlackschicht mit einer Zweischichtlackierung aus einem üblichen mit Melaminharz vernetzenden, lösemittelhaltigen Basislack auf Acrylharz- oder Polyesterharzbasis und einem üblichen Klarlack eine Mehrschichtlackierung liefert, die das heute für Kraftfahrzeugerstlackierungen geforderte Eigenschaftsniveau, insbesondere Steinschlagschutzniveau nicht erreicht.

Die DE-A-195 29 394 beschreibt ein Verfahren zur Herstellung einer mehrschichtigen Lackierung auf metallischen Substraten durch elektrophoretischen Auftrag einer Grundierung, Einbrennen der erhaltenen Grundierungsschicht, Überlackieren mit einer farb- und/oder effektgebenden Basislackschicht und gegebenenfalls Auftrag einer Klarlackschicht, bei dem direkt auf die eingebrannte Grundierungsschicht, ohne Aufbringen weiterer Zwischenschichten ein farb- und/oder effektgebender Basislack auf wäßriger Basis aufgetragen wird, der ein oder mehrere wasserverdünnbare Bindemittel, die frei von Hydroxylgruppen sind oder Hydroxylgruppen entsprechend einer OH-Zahl von unter 100 mg KOH/g aufweisen, sowie ein oder mehrere Di- und/oder Polyisocyanate mit freien Isocyanatgruppen in einer Menge von 4 bis 45 g, berechnet als freies NCO, pro 100 g seines Bindemittelfestkörpers enthält, wobei das Verhältnis der Anzahl freier NCO-Gruppen zur Anzahl von im Bindemittel vorhandenen OH-Gruppen über 5 : 1 liegt. Der hohe Isocyanatüberschuß führt dazu, daß der Großteil der Isocyanatgruppen nicht mit dem Bindemittel, sondern mit Wasser reagiert.

Aus Gründen der Rationalisierung und der Materialersparnis besteht bei der Kraftfahrzeuglackierung der Wunsch nach einer Reduktion der Anzahl der Arbeitsgänge und der Lackschichten sowie einer Schichtdickenreduzierung des Lackaufbaus, ohne jedoch wesentliche Einbußen im üblichen Gesamteigenschaftsniveau zuzulassen.

Aufgabe der Erfindung ist es, ein Verfahren zur Herstellung von Mehrschichtlackierungen, insbesondere von Kraftfahrzeuglackierungen mit im Vergleich zum Stand der Technik vergleichbarem Gesamteigenschaftsniveau bei verringerter Anzahl an Lackschichten bzw. Einbrennschritten und bevorzugt auch verringerter Schichtdicke des Gesamtlackaufbaus bereitzustellen. Insbesondere soll das Verfahren auch die Herstellung von Kraftfahrzeugeffektlackierungen mit hoher Effektausprägung erlauben.

Es hat sich gezeigt, daß diese Aufgabe überraschenderweise gelöst werden kann durch das einen Gegenstand der Erfindung bildende Verfahren zur Mehrschichtlackierung durch elektrophoretischen Auftrag einer Grundierung auf ein leitfähiges, z.B. metallisches Substrat, Einbrennen der erhaltenen Grundierungsschicht, Überlackieren mit einer effektgebenden Basislackschicht und Auftrag einer Klarlackschicht sowie bevorzugt gemeinsames Einbrennen der Basislack- und Klarlackschicht, das dadurch gekennzeichnet ist, daß direkt auf die eingebrannte Grundierungsschicht. ohne Aufbringen weiterer Zwischenschichten eine erste Effektbasislackschicht aus einem Wasserbasislack aufgetragen wird, der ein oder mehrere wasserverdünnbare Bindemittel, sowie ein oder mehrere Polyisocyanate mit freien oder blockierten Isocyanatgruppen enthält, wobei die Hydroxylzahl des Bindemittelfestkörpers im wäßrigen Basislacküberzugsmittel zwischen 10 und 300 mg KOH/g beträgt und das Verhältnis der Anzahl freier oder blockierter NCO-Gruppen zur Anzahl der dem Bindemittelfestkörper entstammenden Hydroxylgruppen über 0,5 : 1 und unter 5 : 1 liegt, und vor dem Auftrag der Klarlackschicht zusätzlich eine zweite Effektlackschicht mit einem Wasserbasislack aufgebracht wird, wobei dieser Wasserbasislack dem zur Erstellung der ersten Effektbasislackschicht verwendeten Wasserbasislack entspricht, jedoch frei von freien oder blockierten Polyisocyanaten ist.

Es hat sich gezeigt, daß das erfindungsgemäße Verfahren besonders günstig für Kraftfahrzeugkarossen oder deren Teile durchführbar ist. Es besteht der Vorteil, die elektrophoretisch erhaltene Grundierung direkt, ohne Aufbringen von Zwischenschichten, beispielsweise einer Füllerschicht, mit der Basislackschicht zu überlackieren.
Innerhalb des erfindungsgemäßen Verfahrens können alle an sich bekannten anodisch oder kathodisch abscheidbaren Elektrotauchlacke zur Erzeugung einer elektrophoretisch aufgebrachten Grundierung verwendet werden. Dabei handelt es sich z.B. um wäßrige Überzugsmittel mit einem Festkörper bis zu 50 Gew.-%, beispielsweise 10 bis 50 Gew.-%, insbesondere 10 bis 20 Gew. %. Der Festkörper wird gebildet aus für die Elektrotauchlackierung üblichen Bindemitteln, die ionische Gruppen oder in ionische Gruppen überführbare Gruppen sowie gegebenenfalls zur chemischen Vernetzung fähige Gruppen tragen, sowie gegebenenfalls vorhandenen Vernetzern, Pigmenten, Füllstoffen und/oder lacküblichen Additiven. Die ionischen oder in ionische Gruppen überführbaren Gruppen können anionische oder in anionische Gruppen überführbare Gruppen, z.B. saure Gruppen, wie -COOH-Gruppen oder kationische oder in kationische Gruppen überführbare, z.B. basische Gruppen, wie Aminogruppen oder Ammonium-, z.B. quartäre Ammoniumgruppen, Phosphonium- und/oder Sulfonium-Gruppen sein. Bevorzugt sind Bindemittel mit basischen bzw. kationischen Gruppen. Besonders bevorzugt sind stickstoffhaltige basische Gruppen. Diese Grupen können quarternisiert vorliegen oder sie werden zumindest teilweise mit einem üblichen Neutralisationsmittel, einer Säure, z.B. einer organischen Monocarbonsäure, wie z.B. Ameisensäure oder Essigsäure, in ionische Gruppen überführt.

Zur Herstellung der Elektrotauchlackschicht können beispielsweise die üblichen, anionische Gruppen enthaltenden anodisch abscheidbaren Elektrotauchlack-Bindemittel und Lacke (ATL) verwendet werden. Es handelt sich beispielsweise um Bindemittel auf Basis von Polyestern, Epoxidharzen, Poly(meth)acrylaten, Maleinatölen oder Polybutadienölen mit einem Gewichtsmittel der Molmasse von beispielsweise 300 bis 10000 und einer Säurezahl von 35 bis 300 mg KOH/g. Die Bindemittel tragen z.B. - COOH, -SO₃H und/oder -PO₃H₂-Gruppen. Die Harze können nach Neutralisation von mindestens einem Teil der sauren Gruppen in die Wasserphase überführt werden. Die Bindemittel können selbstvernetzend oder fremdvernetzend sein. Die Lacke können daher auch übliche Vernetzer enthalten, z.B. Triazinharze, Vernetzer, die umesterungsfähige Gruppen enthalten oder blockierte Polyisocyanate. Spezielle Beispiele für solche im erfindungsgemäßen Verfahren einsetzbare anionische Gruppen enthaltende anodisch abscheidbare Elektrotauchlack-Bindemittel und Lacke (ATL) sind z.B. in der DE-A-28 24 418 beschrieben.

Bevorzugt werden im erfindungsgemäßen Verfahren jedoch kathodische Elektrotauchlacke (KTL) auf Basis kationischer bzw. basischer Bindemittel eingesetzt. Solche basischen Harze sind beispielsweise primäre, sekundäre oder tertiäre Aminogruppen enthaltende Harze, deren Aminzahlen z.B. bei 20 bis 250 mg KOH/g liegen. Das Gewichtsmittel der Molmasse (Mw) der Basisharze liegt bevorzugt bei 300 bis 10000. Beispiele für solche Basisharze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind die dem Fachmann geläufigen Aminoplastharze, blockierte Polyisocyanate, Vernetzer mit endständigen Doppelbindungen, Polyepoxidverbindungen oder Vernetzer, die umesterungsfähige Gruppen enthalten.

Beispiele für in erfindungsgemäß verwendbaren kathodischen Tauchlack (KTL)-Bädern einsetzbare Basisharze und Vernetzer sind in EP-A-0 082 291, EP-A-0 234 395, EP-A-0 227 975, EP-A-0 178 531, EP-A-0 333 327, EP-A-0 310 971, EP-A-0 456 270, US 3 922 253, EP-A-0 261 385, EP-A-0 245 876, DE-A-33 24 211, EP-A-0 414 199 und EP-A-0 476 514 beschrieben.

Solche Harze können allein oder im Gemisch eingesetzt werden. Bevorzugt werden sogenannte "non-yellowing"-KTL-Systeme eingesetzt, die eine Vergilbung oder Verfärbung der Mehrschichtlackierung beim Einbrennen vermeiden. Beispielsweise handelt es sich dabei um mittels speziell ausgewählter blockierter Polyisocyanate vernetzende KTL-Systeme, wie beispielsweise in EP-A-0 265 363 beschrieben.

Zusätzlich zu den Basisharzen und gegebenenfalls vorhandenem Vernetzer kann das Elektrotauchlack (ETL)-Überzugsmittel Pigmente, Füllstoffe und/oder lackübliche Additive enthalten. Als Pigmente und Füllstoffe kommen die üblichen anorganischen und/oder organischen Pigmente und Füllstoffe in Frage. Beispiele sind Ruß, Titandioxid, Eisenoxidpigmente, Phthalocyaninpigmente, Chinacridonpigmente, Kaolin, Talkum oder Siliziumdioxid.

Die Pigmente können zu Pigmentpasten dispergiert werden, z.B. unter Verwendung von bekannten Pastenharzen. Solche Harze sind dem Fachmann geläufig. Beispiele für erfindungsgemäß in KTL-Bädern verwendbare Pastenharze sind in der EP-A-0 183 025 und in der EP-A-0 469 497 beschrieben.

Als Additive sind die üblichen Additive möglich, wie sie insbesondere für ETL-Überzugsmittel bekannt sind. Beispiele dafür sind die dem Fachmann geläufigen, üblichen Netzmittel, Neutralisationsmittel, Verlaufsmittel, Katalysatoren, Korrosionsinhibitoren, Antischaummittel, Lösemittel, insbesondere jedoch Lichtschutzmittel gegebenenfalls in Kombination mit Antioxidantien.

Aus den Elektrotauchlackbädern werden durch elektrophoretische Abscheidung in bekannter Weise. Grundierungen auf das elektrisch leitfähige, z.B. metallische Substrat aufgebracht, beispielsweise in einer Trockenschichtdicke von 15 bis 30 µm. Gegebenenfalls können dann nicht festhaftende Lackreste abgespült werden. Die erhaltene Lackschicht wird dann bei erhöhter Temperatur, beispielsweise bis zu 180°C, eingebrannt und chemisch vernetzt, bevor erfindungsgemäß ohne Aufbringen weiterer Zwischenschichten eine effektgebende Wasserbasislackschicht und eine Klarlackschicht bevorzugt im Naß-in-Naß-Verfahren aufgebracht werden. Der Wasserbasislack enthält ein oder mehrere wasserverdünnbare Bindemittel, sowie ein oder mehrere Polyisocyanate mit freien oder blockierten Isocyanatgruppen, wobei die Hydroxylzahl des Bindemittelfestkörpers im wäßrigen Basislacküberzugsmittel zwischen 10 und 300 mg KOH/g beträgt. Das Verhältnis der Anzahl freier oder blockierter NCO-Gruppen zur Anzahl der dem Bindemittelfestkörper entstammenden Hydroxylgruppen liegt über 0,5 : 1 und unter 5 : 1.

Bei den im erfindungsgemäßen Verfahren einsetzbaren effektgebenden Wasserbasislacken handelt es sich um wäßrige, an sich wasserunmischbare (die mit externen Emulgatoren eingesetzt werden) oder wasserverdünnbare Bindemittel, ein oder mehrere freie oder blockierte Polyisocyanate, gegebenenfalls zusätzliche Vernetzer, gegebenenfalls hydroxyfunktionelle Reaktivverdünner sowie farb- und/oder effektgebende Pigmente und/oder Füllstoffe und lackübliche Additive enthaltende Überzugsmittel. Die Hydroxylzahl ihres Bindemittelfestkörpers beträgt zwischen 10 und 300, bevorzugt zwischen 20 und 200, besonders bevorzugt zwischen 30 und 150 mg KOH/g. Der Bindemittelfestkörper wird gebildet aus der Summe der nichtflüchtigen Bestandteile der Bindemittel an sich und der gegebenenfalls enthaltenen Pastenharze (spezielle Anreibebindemittel für Pigmente und Füllstoffe) sowie aus gegebenenfalls enthaltenen hydroxyfunktionellen Reaktivverdünnern. Die Summe aus Bindemittelfestkörper, freiem oder blockiertem Polyisocyanat und gegebenenfalls zusätzlichem Vernetzer wird als Festharzgehalt des im erfindungsgemäßen Verfahren einsetzbaren Wasserbasislacks definiert.

Das oder die freien oder blockierten Polyisocyanate sind in einer solchen Menge enthalten, daß das Verhältnis der Anzahl freier oder blockierter NCO-Gruppen zur Anzahl der dem Bindemittelfestkörper entstammenden Hydroxylgruppen über 0,5 : 1 und unter 5 : 1, bevorzugt bei 0,7 : 1 bis 2,5 : 1 und insbesondere bei 0,8 : 1 bis 2,0 : 1 liegt. Bevorzugt sind freie, nicht blockierte Polyisocyanate, d.h. bei den im erfindungsgemäßen Verfahren einsetzbaren Wasserbasislacken handelt es sich bevorzugt um zweikomponentig zu lagernde Überzugsmittel.

Die im erfindungsgemäßen Verfahren einsetzbaren Wasserbasislacke enthalten in Wasser gelöste oder dispergierte Bindemittel. Dabei kann es sich um an sich nicht wasserverdünnbare Bindemittel handeln, die unter Zusatz externer Emulgatoren in die wäßrige Phase überführt worden sind. Als externe Emulgatoren können kationaktive, anionaktive oder nicht-ionische Emulgatoren dienen. Beispiele für verwendbare fremdemulgierte Systeme aus hydroxyfunktionellem Bindemittel und freiem Polyisocyanat sind beschrieben in DE-C-43 15 593. Bevorzugt jedoch enthalten die Wasserbasislacke wasserverdünnbare Bindemittel, die frei von externen Emulgatoren eingesetzt werden können. Bei den wasserverdünnbaren Bindemittelsystemen handelt es sich um selbstdispergierende Bindemittel, deren Wasserverdünnbarkeit aus einem ausreichend hohen Gehalt an ionischen Gruppen und/oder hydrophilen nicht-ionischen Polyoxyalkylenstrukturen resultiert. Bevorzugt enthalten sie ionische Gruppen und gegebenenfalls zusätzlich nicht-ionische Polyoxyalkylenstrukturen, beispielsweise Polyoxypropylen- und/oder Polyoxyethylenstrukturen. Als ionische Gruppen kommen kationische, beispielsweise durch Neutralisation von primären, sekundären und/oder tertiären Amingruppen mit Säuren gebildete Ammoniumgruppen oder durch Neutralisation von sauren Gruppen mit Basen gebildete anionische Gruppen, beispielsweise Sulfonat-, Phosphonat- oder Carboxylatgruppen in Frage. Bevorzugt sind Bindemittel mit anionischen Gruppen, insbesondere durch Neutralisation mit Basen in Carboxylatgruppen überführte Carboxylgruppen.

Kationisch stabilisierte Bindemittel enthalten beispielsweise zwischen 8 und 450 Milliequivalente an kationischen Gruppen pro 100 g Festharz, beispielsweise Ammoniumgruppen. Beispiele für kationisch stabilisierte Bindemittel, die in den im erfindungsgemäßen Verfahren einsetzbaren Wasserbasislacken verwendet werden können, sind beschrieben in EP-A-0 554 747. Die bevorzugten anionisch stabilisierten Bindemittel enthalten beispielsweise zwischen 5 und 400 Milliequivalente anionische bzw. in anionische Gruppen überführbare Gruppen pro 100 g Festharz, beispielsweise entsprechend einer von Carboxylgruppen herrührenden Säurezahl zwischen 10 und 200, bevorzugt zwischen 15 und 100 und besonders bevorzugt zwischen 15 und 60 mg KOH/g.

Der Bindemittelfestkörper der im erfindungsgemäßen Verfahren einsetzbaren Wasserbasislacke zeichnet sich aus durch eine Hydroxylzahl zwischen 10 und 300, bevorzugt zwischen 20 und 200, besonders bevorzugt zwischen 30 und 150 mg KOH/g. Bei der angegebenen Hydroxylzahl handelt es sich um einen Durchschnittswert, der sich aus den einzelnen Beiträgen des oder der Bindemittel, der gegebenenfalls enthaltenen Pastenharze und gegebenenfalls enthaltener hydroxyfunktioneller Reaktivverdünner ergibt. Dabei ist es bevorzugt, wenn die Hydroxylzahl zu einem Prozentsatz von mindestens 50 % aus den Bindemitteln stammt, besonders bevorzugt zu mindestens 75 % und insbesondere zu 90 bis 100 %. Dabei kann sich dieser Prozentsatz aus einem Alleinbindemittel oder einer Bindemittelkombination ergeben. Es können Bindemittel mit einer OH-Zahl von 0 bis unter 10 mg KOH/g enthalten sein. Beispiele sind physikalisch trocknende, thermoplastische Bindemittel, die weder mit den freien oder blockierten Polyisocyanaten noch mit den gegebenenfalls zusätzlich enthaltenen Vernetzern reagieren. Bevorzugt sind als Bindemittel nur solche mit Hydroxylzahlen oberhalb von 10 mg KOH/g enthalten.

Die Harzbasis der Bindemittel unterliegt an sich keiner Beschränkung. Beispiele für geeignete Bindemittel sind (Meth)acrylcopolymerisate, Polyesterharze, urethanisierte Polyester, Polyurethane, Polyharnstoffe sowie Polyurethanharnstoffe mit zahlenmittleren Molekulargewichten Mn über 500 und im allgemeinen unter 50000. Es können ein oder mehrere Bindemittel im Gemisch eingesetzt werden. Es können auch aus diesen Bindemittelklassen abgeleitete Hybridbindemittel eingesetzt werden. Dabei handelt es sich um Polymerhybride, wobei zwei oder mehrere Bindemitteltypen kovalent oder in Form interpenetrierender Harzmoleküle verbunden vorliegen können. Beispiele für Polymerhybridbindemittel sind Polyester(meth)acrylate oder Polyurethan(meth)acrylate, bei denen Polyester- bzw. Polyurethanharz und (Meth)acrylcopolymer kovalent oder in Form interpenetrierender Harzmoleküle verbunden sind.

Bevorzugte Bindemittelklassen sind Polyester, Polyurethane, Polyurethan(meth)acrylate sowie Polyester(meth)acrylate. Insbesondere bevorzugt sind in den im erfindungsgemäßen Verfahren eingesetzten Wasserbasislacken Polyurethan- und/oder Polyurethan(meth)acrylat-Hybrid-Bindemittel in einem Mengenanteil von mindestens 20 Gew.-%, bezogen auf den Bindemittelfestkörper enthalten.

Spezielle Beispiele für wasserverdünnbare (Meth)acrylcopolymerisate, die als Bindemittel in den im erfindungsgemäßen Verfahren einsetzbaren Wasserbasislacken enthalten sein können, und für geeignete Kombinationen dieser (Meth)acrylcopolymerisate mit freien Polyisocyanaten in Form wäßriger Lacksysteme sind beschrieben in EP-A-0 358 979, EP-A-0 496 210, EP-A-0 557 844 und WO 95 02 005.

Spezielle Beispiele für wasserverdünnbare gegebenenfalls urethanisierte Polyesterharze, die als Bindemittel in den im erfindungsgemäßen Verfahren einsetzbaren Wasserbasislacken enthalten sein können, und für geeignete Kombinationen dieser Polyesterharze mit freien Polyisocyanaten in Form wäßriger Lacksysteme sind beschrieben in EP-A-0 496 205, EP-A-0 537 568, EP-A-0 583 728 und EP-A-0 654 053.

Spezielle Beispiele für wasserverdünnbare Polyurethanharze, die als Bindemittel in den im erfindungsgemäßen Verfahren einsetzbaren Wasserbasislacken enthalten sein können, und für geeignete Kombinationen dieser Polyurethanharze mit freien Polyisocyanaten in Form wäßriger Lacksysteme sind beschrieben in EP-A-0 469 389, EP-A-0 562 436.

Spezielle Beispiele für Polyester(meth)acrylat-Hybride, die als Bindemittel in den im erfindungsgemäßen Verfahren einsetzbaren Wasserbasislacken enthalten sein können, und für geeignete Kombinationen dieser Polyester(meth)acrylat-Hybride mit freien Polyisocyanaten in Form wäßriger Lacksysteme sind beschrieben in EP-A-0 543 228, worauf hiermit im Rahmen der vorliegenden Erfindung ausdrücklich jedoch nicht ausschließlich Bezug genommen wird.

Spezielle Beispiele für Polyurethan(meth)acrylat-Hybride, die als Bindemittel in den im erfindungsgemäßen Verfahren einsetzbaren Wasserbasislacken enthalten sein können, und für geeignete Kombinationen dieser Polyurethan(meth)acrylat-Hybride mit freien Polyisocyanaten in Form wäßriger Lacksysteme sind beschrieben in EP-A-0 657 483.

Die im erfindungsgemäßen Verfahren zur Herstellung der ersten Effektlackschicht einsetzbaren Wasserbasislacke enthalten freie oder blockierte Polyisocyanate, wobei freie Polyisocyanate bevorzugt sind. Die freien oder blockierten Polyisocyanate können in der wäßrigen Phase gelöst oder dispergiert und/oder in der Bindemittelphase gelöst oder dispergiert in den Wasserbasislacken vorliegen. Sie sind in einer solchen Menge enthalten, daß das Verhältnis der Anzahl freier oder blockierter NCO-Gruppen zur Anzahl der dem Bindemittelfestkörper entstammenden Hydroxylgruppen über 0,5 : 1 und unter 5 :1, bevorzugt 0,7 : 1 bis 2,5 : 1 und insbesondere 0,8 : bis 2 : 1 beträgt.

Als Polyisocyanate, die einzeln oder im Gemisch in den im erfindungsgemäßen Verfahren einsetzbaren Wasserbasislacken in blockierter oder bevorzugt freier Form enthalten sein können, dienen beliebige organische Di- und/oder Polyisocyanate mit aliphatisch, cycloaliphatisch, araliphatisch und/oder weniger bevorzugt aromatisch gebundenen Isocyanatgrupen, die bei Raumtemperatur flüssig sind oder durch Zusatz organischer Lösemittel verflüssigt oder in gelöster Form vorliegen und dabei bei 23°C im allgemeinen eine Viskosität von 0,5 bis 2000 mPa.s, vorzugsweise über 1 und unter 1000 mPa.s, besonders bevorzugt unter 200 mPa.s aufweisen. Als Diisocyanate sind solche bevorzugt, die etwa 3 bis etwa 36, insbesondere etwa 8 bis 15 Kohlenstoffatome enthalten. Beispiele fiir geeignete Diisocyanate sind Hexamethylendiisocyanat, Tetramethylxylylendiisocyanat, Isophorondiisocyanat, Dicyclohexylmethandiisocyanat, Cyclohexandiisocyanat.

Als Polyisocyanate können auch solche eingesetzt werden, die Heteroatome im die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bevorzugt besitzen die Polyisocyanate eine höhere Isocyanatfunktionalität als 2, wie beispielsweise durch Diund/oder Trimerisierung vorstehend genannter Diisocyanate hergestellte Polyisocyanate vom Uretdion- bzw. Isocyanurattyp. Weitere Beispiele sind durch Umsetzung der vorstehend genannten Diisocyanate mit Wasser hergestellte, Biuretgruppen enthaltende Polyisocyanate oder durch Umsetzung mit Polyolen hergestellte, Urethangruppen enthaltende Polyisocyanate.

Sehr gut geeignet sind beispielsweise "Lackpolyisocyanate" auf Basis von Hexamethylendiisocyanat oder von Isophorondiisocyanat und/oder Dicyclohexylmethandiisocyanat, insbesondere solche die ausschließlich auf Hexamethylendiisocyanat basieren. Unter "Lackpolyisocyanaten" auf Basis dieser Diisocyanate sind die an sich bekannten Biuret-, Urethan-, Uretdion-, und/oder Isocyanuratgruppen aufweisenden Derivate dieser Diisocyanate zu verstehen.

Die Polyisocyanate können, wenn auch im Rahmen des erfindungsgemäßen Verfahrens nicht bevorzugt, in blockierter Form als Vernetzer eingesetzt werden. Sie können mit den üblichen in der Lackchemie eingesetzten, flüchtigen, unter den späteren Einbrennbedingungen wieder abspaltbaren einwertigen Blockierungsmitteln blockiert sein. Beispiele hierfür sind verschiedene Alkohole, Oxime, Lactame, Phenole, Amine und CH-acide Verbindungen.

Die Polyisocyanate können innerhalb eines Moleküls mit gleichen oder verschiedenen Blockierungsmitteln blockiert sein. Es können auch Gemische unterschiedlich blockierter Polyisocyanate verwendet werden.

Die blockierten oder bevorzugt freien Polyisocyanate können als solche bei der Herstellung des Wasserbasislacks zugesetzt werden, beispielsweise durch Einrühren bzw. Einemulgieren. Dabei kann das gelöste oder dispergierte Bindemittel die Funktion eines Emulgators für das zugesetzte Polyisocyanat übernehmen. Es kann günstig sein, wenn ein Emulgator zu Hilfe genommen wird oder wenn die freien Polyisocyanate mit einem wassermischbaren organischen Lösemittel oder Lösemittelgemisch vorverdünnt werden. Bevorzugt werden dabei insbesondere im Falle der Verwendung der bevorzugten freien Polyisocyanate gegenüber Isocyanatgruppen inerte Lösemittel verwendet. Beispiele sind Lösemittel, die keinen aktiven Wasserstoff enthalten, beispielsweise Ether, wie z.B. Diethylenglykoldiethylether, Dipropylenglykoldimethylether, Glykoletherester, wie Butylglykolacetat, Butyldiglykolacetat, Methoxypropylacetat oder besonders bevorzugt N-Methylpyrrolidon.

Geeignet sind weiterhin hydrophile, wie vorstehend beschrieben blockierte oder bevorzugt freie Polyisocyanate, die durch eine ausreichende Anzahl ionischer Gruppen und/oder durch terminale oder laterale Polyetherketten in der wäßrigen Phase stabilisiert werden. Im Falle ionisch stabilisierter Polyisocyanate ist darauf zu achten, daß kationische Gruppen enthaltende Polyisocyanate nicht in anionisch stabilisierten Wasserbasislacken und anionische Gruppen enthaltende Polyisocyanate nicht in kationisch stabilisierten Wasserbasislacken eingesetzt werden. Beispiele für verwendbare ionisch und/oder nicht-ionisch stabilisierte, hydrophile Polyisocyanate sind beschrieben in EP-A-0 061 628, EP-A-0 206 059, EP-A-0 469 389, EP-A-0 510 438, EP-A-0 516 277, EP-A-0 540 985, EP-A-0 654 410, EP-A-0 680 983, DE-A-41 29 953, DE-A-41 42 275. Wasserdispergierbare Polyisocyanate werden z.B. von der Firma Bayer unter dem Namen Bayhydur^{R} LS 2025 und LS 2032 als Handelsprodukte vertrieben. Auch diese können mit den vorstehend erwähnten Lösemitteln verdünnt werden.

Werden die Polyisocyanate in der bevorzugten freien Form eingesetzt, so handelt es sich bei den im erfindungsgemäßen Verfahren einsetzbaren Wasserbasislacken um Zweikomponentenüberzugsmittel, d.h. der an sich fertige Wasserbasislack wird getrennt vom freien Polyisocyanat gelagert. Durch Zumischen der Polyisocyanatkomponente, wie vorstehend beschrieben, wird aus dem an sich fertigen, lediglich oder im wesentlichen physikalisch trocknenden, thermoplastischen Wasserbasislack, der chemisch vernetzende im erfindungsgemäßen Verfahren direkt auf die eingebrannte Elektrotauchlackschicht applizierbare Wasserbasislack. Im Falle der Verwendung der weniger bevorzugten blockierten Polyisocyanate kann ebenso verfahren werden, d.h. der blockiertes Polyisocyanat enthaltende, an sich einkomponentig lagerfähige Wasserbasislack kann auch zweikomponentig formuliert werden. Er besteht dann aus an sich fertigem Wasserbasislack und getrennt gelagerter blockierter Polyisocyanat-Komponente.

Vorzugsweise werden die freien Polyisocyanate den an sich fertigen Wasserbasislacken erst kurz vor der Applikation zugemischt. Dies kann in üblicher Weise erfolgen, beispielsweise mittels einer in der Automobilserienlackierung üblichen Zweikomponentenmischanlage oder man bedient sich beispielsweise einer Verfahrensweise wie aus der EP-A-0 685 544 bekannt.

Die im erfindungsgemäßen Verfahren einsetzbaren Wasserbasislacke können hydroxyfunktionelle Reaktivverdünner in einem Mengenanteil von bis zu 20 Gew.-%, z.B. 1 bis 20 Gew.-%, bezogen auf Bindemittelfestkörper, enthalten, die an sich wasserlöslich sind oder mittels externer Emulgatoren oder durch die Emulgatorwirkung der wasserverdünnbaren Bindemittel in die wäßrige Phase überführt worden sind. Es handelt sich um Verbindungen mit einem zahlenmittleren Molekulargewicht (Mn) von 62 bis 500, bevorzugt unterhalb von 300 und einer OH-Funktionalität von mindestens 2, beispielsweise bevorzugt zwischen 2 und 4. Beispiele für geeignete hydroxyfunktionelle Reaktivverdüner sind Alkandiole mit 2 bis 8 Kohlenstoffatomen, Glyzerin, gegebenenfalls hydriertes Rizinusöl, Trimethylolpropan, Pentaerythrit, Sorbit, Mannit sowie den vorstehenden Einschränkungen bezüglich des zahlenmittleren Molekulargewichts genügende Ethoxylierungs- und/oder Propoxylierungsprodukte dieser Polyalkohole.

Zur Bereitung der im erfindungsgemäßen Verfahren einsetzbaren Wasserbasislacke können gegebenenfalls zusätzliche Vernetzer, wie beispielsweise Formaldehyd-Kondensationsharze, wie Phenol-Formaldehydkondensationsharze und Amin-Formaldehydkondensationsharze eingesetzt werden, ihr Mengenanteil beträgt zwischen 0 und 5 Gew.-%, bezogen auf Festharzgehalt im Wasserbasislack und reicht für eine Vernetzung der Wasserbasislacke nicht aus.

Als im Wasserbasislack gegebenenfalls verwendbare zusätzliche Vernetzer eignen sich insbesondere übliche Aminoplastharze. Es handelt sich beispielsweise um alkylierte Kondensate, die durch Umsetzung von Aminotriazinen und Amidotriazinen mit Aldehyden hergestellt werden. Verwendbar sind auch nach bekannten technischen Verfahren hergestellte Amine oder Aminogruppen tragende Verbindungen wie Melamin, Guanamin, Acetoguanamin, Benzoguanamin, Dicyandiamid oder Harnstoff, die in Gegenwart von Alkoholen, wie Methanol, Ethanol, Propanol, Butanol oder Hexanol mit Aldehyden, insbesondere Formaldehyd, kondensiert werden. Beispiele für verwendbare derartige Harze und ihre Herstellung werden in "Houben-Weyl, Methoden der organischen Chemie" 1963, Seite 357, beschrieben. Solche Produkte sind im Handel erhältlich.

Weiterhin können die im erfindungsgemäßen Verfahren eingesetzten Wasserbasislacke dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die Wasserbasislacke lacktechnische Additive enthalten, beispielsweise rheologiebeeinflussende Mittel, wie hochdisperse Kieselsäure, anorganische Schichtsilikate oder polymere Harnstoffverbindungen. Als Verdicker können auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate verwendet werden.

Es können auch Antiabsetzmittel, Verlaufsmittel, Lichtschutzmittel (beispielsweise vom HALS-Typ, vom Benztriazol-Typ, Mikrotitandioxid), Antischaummittel, wie beispielsweise silikonhaltige Verbindungen, Netzmittel sowie haftvermittelnde Substanzen eingesetzt werden. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Zur Beschleunigung der Härtung können gegebenenfalls übliche, dem Fachmann geläufige Katalysatoren eingesetzt werden.

Die Wasserbasislacke können organische Lösemittel enthalten. Diese können aus der Herstellung der Bindemittel oder aus einem wie vorstehend erläutert mit wassermischbarem Lösemittel vorverdünnten freien oder blockierten Polyisocyanat stammen oder sie werden separat zugegeben. Beispiele für Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, Glykoletherester, z.B. Butylglykolacetat, Butyldiglykolacetat, Methoxypropylacetat; N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte, aliphatische C6- bis C12-Kohlenwasserstoffe.

Die Wasserbasislacke enthalten Effektpigmente und gegebenenfalls farbgebende Pigmente, wie farbgebende Adsorptionspigmente und gegebenenfalls Füllstoffe.

Beispiele für Effektpigmente sind die plättchenförmigen üblicherweise in Effektlacken verwendeten Pigmente, wie Metallpigmente, z.B. aus Titan, Aluminium oder Kupfer, Interferenzpigmente, wie z.B. metalloxidbeschichtete Metallpigmente, z.B. titandioxidbeschichtetes oder mischoxidbeschichtetes Aluminium, beschichteter Glimmer, z.B. titandioxidbeschichteter oder mischoxidbeschichteter Glimmer, Mikrotitandioxid und Graphiteffektpigmente, plättchenförmiges Eisenoxid (micaceous iron oxide), Molybdändisulfidpigmente, plättchenförmige Kupferphthalocyaninpigmente und Bismutoxichloridplättchen, beschichtete Glasflakes, sowie Effektpigmente, die einen starken Farbflop insbesondere auf dunklen Untergründen entwickeln. Beispiele für derartige Effektpigmente sind beschrieben in EP-A-0 358 208, EP-A-0 383 376, EP-A-0 601 483, EP-A-0 686 674, EP-A-0 688 833, US 44 34 010, WO 95 17 480, WO 95 32 247, WO 95 32 248.

Die Effektpigmente, die als Pulver oder in Form einer handelsüblichen Paste vorliegen können, werden im allgemeinen zunächst mit bevorzugt wasserverdünnbaren organischen Lösemitteln und Additiven versetzt und zu einer Paste verarbeitet. Es kann zweckmäßig sein bei der Herstellung der Paste die vorstehend beschriebenen wasserverdünnbaren Bindemittel und/oder Pastenharze zuzusetzen. Es ist darauf zu achten, daß die plättchenförmigen Effektpigmente beim Vermischen nicht mechanisch beschädigt werden.

Beispiele für farbgebende Absorptionspigmente und/oder Füllstoffe, die organischer oder anorganischer Natur sein können, sind Titandioxid, Eisenoxidpigmente, Ruß, Siliziumdioxid, Bariumsulfat, Talkum, Azopigmente, Phthalocyaninpigmente, Chinacridonpigmente, Diketo-Pyrrolopyrrol-Pigmente, Perylenpigmente, Indanthronpigmente.

Die farbgebenden Absorptionspigmente und/oder Füllstoffe werden im allgemeinen in einem Teil der wasserverdünnbaren Bindemittel angerieben. Bevorzugt kann das Anreiben auch in einem speziellen wasserverdünnbaren Pastenharz geschehen. Ein Beispiel für ein im Wasserbasislack bevorzugt einsetzbares Pastenharz auf Basis eines anionisch stabilisierten Polyurethanharzes findet sich in der DE-A-40 00 889. Das Anreiben geschieht in üblichen dem Fachmann bekannten Aggregaten. Danach wird mit dem restlichen Anteil des wäßrigen Bindemittels oder des wäßrigen Pastenharzes zur fertigen Farbpigmentanreibung komplettiert.

Handelt es sich bei den im erfindungsgemäßen Verfahren eingesetzten Wasserbasislacken um solche, die auf Basis kationisch stabilisierter Bindemittel formuliert sind, so enthalten diese im allgemeinen Säuren als Neutralisationsmittel. Beispiele sind Ameisensäure, Essigsäure und Milchsäure.

Handelt es sich bei den im erfindungsgemäßen Verfahren eingesetzten Wasserbasislacken um solche, die auf Basis der bevorzugten anionisch stabilisierten Bindemittel formuliert sind, so enthalten diese im allgemeinen Basen als Neutralisationsmittel. Beispiele sind Ammoniak oder organische Amine wie Triethylamin, N-Methylmorpholin, Aminoalkohole wie Dimethylisopropanolamin, Dimethylethanolamin, 2-Amino-2-methylpropanol-1.

Die im erfindungsgemäßen Verfahren eingesetzten Wasserbasislacke besitzen bevorzugt einen Festkörpergehalt von 10 bis 50 Gew.-%, besonders bevorzugt von 15 bis 40 Gew.-%. Das Verhältnis von Pigment- zu Festharzanteil (Bindemittelfestkörper plus freies oder blockiertes Polyisocyanat plus gegebenenfalls zusätzlich vorhandene Vernetzer plus gegebenenfalls vorhandenes Pastenharz) in den Wasserbasislacken beträgt bevorzugt 0,03 : 1 bis 2,5 : 1, besonders bevorzugt 0,06 : 1 bis 2 : 1, jeweils bezogen auf das Festkörpergewicht.

Der Lösemittelgehalt der Wasserbasislacke beträgt praktisch 0 bis bevorzugt unter 20 Gew.-%, besonders bevorzugt unter 15 Gew.-%, bezogen auf den fertigen Lack.

Die Wasserbasislacke können nach üblichen Methoden direkt auf die eingebrannte elektrophoretisch aufgebrachte Grundierung appliziert werden. Bevorzugt werden sie durch Spritzen in einer Trockenschichtdicke von beispielsweise 15 bis 50 µm, bevorzugt 20 bis 40 µm appliziert, beispielsweise durch Druckluftspritzen, Airless-Spritzen, Hochrotation, bevorzugt durch elektrostatischen Sprühauftrag (ESTA), insbesondere durch elektrostatischen Hochrotationsauftrag. Dabei kann der Sprühauftrag in einem oder mehreren Spritzgängen erfolgen.

Die Wasserbasislackschicht kann nach dem Auftrag getrocknet oder eingebrannt werden, bevor sie mit einem Klarlack überlackiert wird. Die Applikation erfolgt jedoch bevorzugt insbesondere wenn der Wasserbasislack freies Isocyanat enthält, im bekannten Naß-in-Naß-Verfahren, d.h. nach einer Ablüftphase, z.B. bei 20 bis 80°C, wird die Wasserbasislackschicht mit einem üblichen flüssigen oder Pulverklarlack (in diesem Fall handelt es sich um eine Trocken-in-Naß-Applikation) in einer Trockenschichtdicke von beispielsweise 30 bis 80, bevorzugt von 30 bis 60 µm überlackiert und gemeinsam mit diesem bei Temperaturen von beispielsweise bis zu 160°C eingebrannt. Dabei richten sich die Trocknungsbedingungen der Decklackschicht (Basislack und Klarlack) nach dem verwendeten Klarlacksystem.

Beim erfindungsgemäßen Verfahren wird vor Auftrag der Klarlackschicht eine zusätzliche zweite Effektwasserbasislackschicht aus dem an sich gleichen, jedoch frei von freiem oder blockiertem Polyisocyanat formulierten Effektwasserbasislack aufgetragen d.h. in einem ersten Spritzgang wird eine Effektwasserbasislackschicht aus dem freies oder blockiertes Polyisocyanat enthaltenden Effektwasserbasislack aufgetragen, bevor in einem zweiten Spritzgang eine weitere Effektwasserbasislackschicht aus dem an sich gleichen, jedoch frei von freiem oder blockiertem Polyisocyanat formulierten Effektwasserbasislack aufgetragen wird. Bevorzugt erfolgt der Auftrag des von freiem oder blockiertem Polyisocyanat freien Effektwasserbasislacks ebenfalls durch Sprühen, z.B. elektrostatisches Sprühen, besonders bevorzugt jedoch durch pneumatischen Sprühauftrag, d.h. es ist besonders bevorzugt, wenn die erste Effektbasislackschicht aus dem freies oder blockiertes Polyisocyanat enthaltenden Effektwasserbasislack durch elektrostatischen Sprühauftrag aufgebracht wird gefolgt von pneumatischem Sprühauftrag der zweiten Effektbasislackschicht aus dem von freiem oder blockiertem Polyisocyanat freien Effektwasserbasislack. Dabei beträgt die Trockenschichtdicke der ersten, Polyisocyanat enthaltenden Effektwasserbasislackschicht bevorzugt zwischen 10 und 30 µm, während die Trockenschichtdicke der zweiten Polyisocyanat-freien Effektwasserbasislackschicht bevorzugt zwischen 7 und 20 µm beträgt, wobei bevorzugt eine Gesamteffektbasislackschichtdicke von maximal 40 µm, besonders bevorzugt darunter ausgebildet wird. Besonders bevorzugt wird beim erfindungsgemäßen Verfahren ein zweikomponentig formulierter Effektwasserbasislack, bestehend aus an sich fertigem Effektwasserbasislack und getrennt gelagerter blockierter oder bevorzugt freier Polyisocyanat-Komponente, verwendet. Die in zwei Spritzgängen aufgebrachten Effektwasserbasislackschichten werden aus dem an sich fertigen Effektwasserbasislack aufgetragen, lediglich bei der Herstellung der ersten Effektwasserbasislackschicht wird dem verwendeten Wasserbasislack eine entsprechende Menge an Polyisocyanatkomponente zugemischt, wie vorstehend beschrieben. Die im zweiten Spritzgang aufgebrachte Effektwasserbasislackschicht ist im wesentlichen thermoplastisch. Sie trocknet lediglich oder im wesentlichen physikalisch und vernetzt nicht beim gemeinsamen Einbrennen mit der nachfolgend applizierten Klarlackschicht.

Als Klarlack sind grundsätzlich alle bekannten oder transparent pigmentierten Überzugsmittel geeignet. Dabei kann es sich um ein- oder mehrkomponentige Klarlacküberzugsmittel handeln. Sie können lösemittelfrei (flüssig oder als Pulverklarlack) sein, oder es kann sich um Systeme auf der Basis von Lösemitteln handeln oder es handelt sich um wasserverdünnbare Klarlacke, deren Bindemittelsysteme in geeigneter Weise, z.B. anionisch, kationisch oder nicht-ionisch, stabilisiert sind. Bei den wasserverdünnbaren Klarlacksystemen kann es sich um wasserlösliche oder in Wasser dispergierte Systeme, beispielsweise Emulsionssysteme oder Pulverslurry-Systeme, wie in EP-A-0 652 264 beschrieben, handeln. Die Klarlacküberzugsmittel härten beim Einbrennen beï erhöhten Temperaturen von beispielsweise bis zu 160°C durch chemische Vernetzung aus.

Bei den im erfindungsgemäßen Verfahren verwendbaren Klarlacken handelt es sich um übliche Klarlacküberzugsmittel, die ein oder mehrere übliche Basisharze als filmbildende Bindemittel enthalten. Sie können, falls die Basisharze nicht selbstvernetzend sind, gegebenenfalls auch Vernetzer enthalten. Sowohl die Basisharzkomponente als auch die Vernetzerkomponente unterliegen keinerlei Beschränkungen. Als filmbildende Bindemittel (Basisharze) können beispielsweise Polyester-, Polyurethan- und/oder Poly(meth)acrylatharze verwendet werden. Die Auswahl der gegebenenfalls enthaltenen Vernetzer ist unkritisch, sie richtet sich nach der Funktionalität der Basisharze, d.h. die Vemetzer werden so ausgewählt, daß sie eine zur Funktionalität der Basisharze komplementäre, reaktive Funktionalität aufweisen. Beispiele für solche komplementäre Funktionalitäten zwischen Basisharz und Vernetzer sind: Carboxyl/Epoxid, an Kohlenstoff oder Silizium direkt gebundenes Hydroxyl/Methylolether, an Kohlenstoff oder Silizium direkt gebundenes Hydroxyl/Freies Isocyanat, an Kohlenstoff oder Silizium direkt gebundenes Hydroxyl/blockiertes Isocyanat, (Meth)acryloyl/CH-acide Gruppe. In diesem Zusammenhang sind unter direkt an Silizium gebundenen Hydroxylgruppen auch latente Silanolgruppen wie z.B. Alkoxysilangruppen, zu verstehen. Sofern miteinander verträglich, können auch mehrere solcher komplementären Funktionalitäten in einem Überzugsmittel nebeneinander vorliegen. Die gegebenenfalls in den Überzugsmitteln enthaltenen Vernetzer können einzeln oder im Gemisch vorliegen.

Neben den chemisch vernetzenden Bindemitteln sowie gegebenenfalls Vernetzern können die im erfindungsgemäßen Verfahren einsetzbaren Klarlacke übliche Additive, wie z.B. Katalysatoren, Verlaufsmittel, Farbstoffe, insbesondere jedoch Rheologiesteuerer, wie Mikrogele, NAD (=non-aqueous-dispersions), disubstituierte Harnstoffe ("sagging control agents") sowie Lichtschutzmittel gegebenenfalls in Kombination mit Antioxidantien enthalten.

Spezielle Beispiele für ein- (1K) und zweikomponentige (2K) nicht-wäßrige Klarlacksysteme, die im erfindungsgemäßen Verfahren als Klarlack eingesetzt werden können, findet man in DE-A-38 26 693, DE-A-40 17 075, DE-A-41 24 167, DE-A-41 33 704, DE-A-42 04 518, DE-A-42 04 611, EP-A-0 257 513, EP-A-0 408 858, EP-A-0 523 267, EP-A-0 557 822, WO-92 11 327.

Spezielle Beispiele für ein- (1K) oder zweikomponentige (2K) Wasserklarlacksysteme, die im erfindungsgemäßen Verfahren als Klarlack eingesetzt werden können, findet man in DE-A-39 10 829, DE-A-40 09 931, DE-A-40 09 932, DE-A-41 01 696, DE-A-41 32 430, DE-A-41 34 290, DE-A-42 03 510, EP-A-0 365 098, EP-A-0 365 775, EP-A-0 496 079, EP-A-0 546 640.

Spezielle Beispiele für Pulverklarlacksysteme, die im erfindungsgemäßen Verfahren als Klarlack eingesetzt werden können, findet man in EP-A-0 509 392, EP-A-0 509 393, EP-A-0 522 648, EP-A-0 544 206, EP-A-0 555 705, DE-A-42 22 194, DE-A-42 27 580.

Der transparente Überzug kann in einer einzigen Schicht oder in Form von mehreren Schichten aus dem gleichen oder aus mehreren verschiedenen transparenten Überzugsmitteln aufgebracht werden. Zweckmäßig wird die transparente Überzugsschicht jedoch aus nur einem Klarlacküberzugsmittel aufgebracht.

Als Substrat für das erfindungsgemäße Verfahren dienen elektrisch leitfähige, z.B. metallische Substrate, insbesondere geeignet sind z.B. Automobilkarossen oder Teile davon, sie können aus vorbehandeltem oder unvorbehandeltem Metall oder aus mit einer elektrisch leitfähigen Schicht versehenem Metall bestehen. Auf die Substrate wird die erste Überzugsschicht, insbesondere in Form einer Korrosionsschutzgrundierung, elektrophoretisch in üblicher Weise und in einer für ETL-Grundierungen üblichen Trockenschichtdicke von beispielsweise 15 bis 30 µm abgeschieden und eingebrannt.

Auf das mit der eingebrannten ETL-Schicht versehene Substrat wird die zweite Überzugsschicht aus dem Wasserbasislack bevorzugt in nur einem Spritzgang in einer von der Deckfähigkeit des Farbtons abhängigen Trockenschichtdicke von bevorzugt 20 bis 40 µm aufgetragen. Beispiele für geeignete Spritzauftragsverfahren sind Druckluftspritzen, Airless-Spritzen oder bevorzugt elektrostatisches Spritzen, wobei elektrostatisches Hochrotationsspritzen ein insbesondere bevorzugtes Auftragsverfahren darstellt. Beim Arbeiten mit Effektwasserbasislack gilt das hinsichtlich optimaler Effektausprägung vorstehend zur besonders bevorzugten und unabhängigen Ausführungsform der Erfindung gesagte. Bevorzugt erfolgt der Auftrag des Klarlacks im Naß-in-Naß-Verfahren, beispielsweise nach einer kurzen Ablüftzeit, bevorzugt bei erhöhten Temperaturen bis 80°C in einer für Klarlackschichten üblichen Trockenschichtdicke von beispielsweise 30 bis 80 µm, bevorzugt 30 bis 60 µm. Wasserbasislackschicht und Klarlackschicht werden also bevorzugt gemeinsam eingebrannt. Beispielsweise liegt die Einbrenntemperatur beim gemeinsamen Einbrennen von Wasserbasislackschicht und Klarlackschicht zwischen 80 und 160°C, bevorzugt unter 140°C. Gegebenenfalls können weitere Klarlackschichten aus dem gleichen oder davon verschiedenen Klarlacküberzugsmittel vor oder nach dem Einbrennen aufgebracht werden.

Das erfindungsgemäße Verfahren erlaubt die Herstellung von Mehrschichtlackierungen, insbesondere Kraftfahrzeuglackierungen mit im Vergleich zum Stand der Technik, der Füllerschichten und/oder andere Zwischenschichten einschließt, verringerter Gesamtschichtdicke und vergleichbarem Gesamteigenschaftsniveau. Es hat sich gezeigt, daß hervorragende Eigenschaften durch die erfindungsgemäße Verfahrensweise erzielt werden, obwohl diese den Wegfall üblicher Füllerschichten ermöglicht. Die freies oder blockiertes Polyisocyanat enthaltenden Wasserbasislacke werden direkt auf die eingebrannte Elektrotauchgrundierung aufgebracht. Es gelingt den Materialverbrauch und den Anfall von Abfällen zu senken. Die Anzahl der Arbeitsgänge ist reduziert. Es sind nur zwei Einbrennschritte notwendig. Das erfindungsgemäße Verfahren führt zu einer hervorragenden Effektausprägung bei erfindungsgemäß hergestellten Effektmehrschichtlackierungen.

Die mit dem erfindungsgemäßen Verfahren hergestellten Mehrschichtlackierungen entsprechen den heute üblichen Anforderungen in der Kraftfahrzeuglackierung. Das erfindungsgemäße Verfahren kann somit mit Erfolg für die Fahrzeugerstlackierung eingesetzt werden. Ebenfalls möglich ist die Anwendung des Verfahrens im Bereich der Autoreparaturlackierung.

## Patentansprüche

1. Verfahren zur Mehrschichtlackierung durch elektrophoretischen Auftrag einer Grundierung auf ein leitfähiges Substrat, Einbrennen der erhaltenen Grundierungsschicht, Überlackieren mit einer effektgebenden Basislackschicht und Auftrag einer Klarlackschicht sowie Einbrennen der Basislack- und Klarlackschicht, **dadurch gekennzeichnet, dass** direkt auf die eingebrannte Grundierungsschicht, ohne Aufbringen weiterer Zwischenschichten eine erste Effektlackschicht mit einem Wasserbasislack aufgetragen wird, der ein oder mehrere wasserverdünnbare Bindemittel, sowie ein oder mehrere Polyisocyanate mit freien oder blockierten Isocyanatgruppen enthält, wobei die Hydroxylzahl des Bindemlttelfestkörpers Im wäßrigen Basislacküberzugsmittel 10 bis 300 mg KOH/g beträgt und das Verhältnis der Anzahl freier oder blockierter NCO-Gruppen zur Anzahl der dem Bindemittelfestkörper entstammenden Hydroxylgruppen über 0,5 : 1 und unter 5 : 1 liegt, und vor dem Auftrag der Klarlackschlcht zusätzlich eine zweite Effektlackschicht mit einem Wasserbasislack aufgebracht wird, wobei dieser Wasserbasislack dem zur Erstellung der ersten Effektbasislackschicht verwendeten Wasserbasislack entspricht, jedoch frei von freien oder blocklerten Polyisocyanaten ist.

2. Verfahren nach Anspruch 1, **dadurch gekennzeichnet, dass** der Wasserbasislack effekt- und farbgebend ist,

3. Verfahren nach Anspruch 1 oder 2, **dadurch gekennzeichnet, dass** zur Ausbildung der Grundierungsschichten ein kathodischer Elektrotauchlack mit Bindemitteln mit kationischen Gruppen entsprechend einer Aminzahl von 20 bis 250 mg KOH/g und einer gewichtsmittleren Molmasse (Mw) von 300 bis 10000 eingesetzt wird.

4. Verfahren nach einem der Ansprüche 1 bis 3, **dadurch gekennzeichnet, daß** Basislack und Klarlackschichten gemeinsam eingebrannt werden.

5. Verfahren nach einem der Ansprüche 1 bis 4, dadurch gekennzelchnet, daß als wäßriges Bindemittel für den wäßrigen Basislack ein anionisch stabilisiertes Bindemittel verwendet wird.

6. Verfahren nach einem der Ansprüche 1 bis 5, **dadurch gekennzeichnet, daß** man ein wäßriges Basislacküberzugsmittel verwendet, das einen oder mehrere hydroxyfunktlonelle Reaktivverdünner in einer Menge von 1 bis 20 Gew.-%, bezogen auf den Bindemittelfestkörper enthält.

7. Verfahren nach Anspruch 6, **dadurch gekennzeichnet, daß** man einen Reaktivverdünner verwendet, der eine zahlenmittlere Molmasse (Mn) von 62 bis 500 und eine OH-Funktionalität von mindestens 2 aufweist.

8. Verfahren nach einem der vorhergehenden Ansprüche, **dadurch gekennzeichnet, daß** man in dem wäßrigen Basislacküberzugsmittel einen oder mehrere zusätzliche, von Polyisocyanaten unterschiedliche Vernetzer verwendet.

9. Verfahren nach einem der vorhergehenden Ansprüche, **dadurch gekennzeichnet, daß** die erste Wasserbasislackschicht in einer Trockenfilmschichtdicke von 10 bis 30 µm und die zweite Effektlackschicht in einer Trockenfilmschichtdicke von 7 bis 20 µm aufgetragen werden,

10. Verfahren nach einem der vorhergehenden Ansprüche, **dadurch gekennzeichnet, daß** die Klarlackschicht in einer Trockenfilmschichtdicke von 30 bis 80 µm aufgetragen wird.

11. Verfahren nach einem der vorhergehenden Ansprüche, **dadurch gekennzeichnet, daß** die Klarlackschicht unter Verwendung eines flüssigen Klarlacks oder eines Pulverklarlacks erstellt wird.

## Claims

1. Process for multi-coat painting by the electrophoretic application of a primer onto a conductive substrate, stoving of the primer coat obtained, coating with an effect-providing undercoat and application of a clear lacquer coat and stoving of the undercoat and clear lacquer coat, **characterised in that** a first effect-providing lacquer coat is applied with a water-based lacquer directly to the stoved primer coat without application of further intermediate coats, the water-based lacquer containing one or more water-dilutable binders and one or more polyisocyanates with free or masked isocyanate groups, the hydroxyl value of the binder solid in the aqueous undercoat being 10 to 300 mg KOH/g and the ratio of the number of free or masked NCO groups to the number of hydroxyl groups originating from the binder solid being over 0.5 : 1 and under 5 : 1, and a second effect-providing lacquer coat is additionally applied with a water-based lacquer prior to application of the clear lacquer coat, this water-based lacquer corresponding to the water-based lacquer used to produce the first effect-providing undercoat, but being free of free or masked polyisocyanates.

2. Process according to claim 1, **characterised in that** the water-based lacquer provides an effect and colouring.

3. Process according to claim 1 or 2, **characterised in that** a cathodic electro-immersion paint with binders containing cationic groups corresponding to an amine number of 20 to 200 mg KOH/g and a weight-average molar mass (Mw) of 300 to 10,000 is used to form the primer coats.

4. Process according to any of claims 1 to 3, **characterised in that** the undercoat and clear lacquer coat are stoved together.

5. Process according to any of claims 1 to 4, **characterised in that** an anionically stabilised binder is used as an aqueous binder for the aqueous undercoat.

6. Process according to any of claims 1 to 5, **characterised in that** the aqueous undercoat used contains one or more hydroxyfunctional reactive diluents in an amount of 1 to 20% by weight, based on the binder solid.

7. Process according to claim 6, **characterised in that** the reactive diluent used has a number average molar mass (Mn) of 62 to 500 and OH functionality of at least 2.

8. Process according to any of the preceding claims, **characterised in that** one or more additional crosslinking agents different from polyisocyanates are used in the aqueous undercoat.

9. Process according to any of the preceding claims, **characterised in that** the first water-based lacquer coat is applied in a dry film thickness of 10 to 30 µm and the second effect-providing lacquer coat in a dry film thickness of 7 to 20 µm.

10. Process according to any of the preceding claims, **characterised in that** the clear lacquer coat is applied in a dry film thickness of 30 to 80 µm.

11. Process according to any of the preceding claims, **characterised in that** the clear lacquer coat is produced using a liquid clear lacquer or a powdered clear lacquer.

## Revendications

1. Procédé permettant de réaliser des mises en peinture multicouche par dépôt électrophorétique d'une couche d'apprêt sur un substrat conducteur, cuisson de la couche d'apprêt obtenue, relaquage avec une couche de peinture de base donnant un effet et dépôt d'une couche de vernis ainsi que cuisson de la couche de base ou la couche de vernis, **caractérisé en ce que** l'on dépose sur la couche d'apprêt cuite, sans dépôt d'autres couches intermédiaires, une première couche de peinture à effets avec une couche de peinture de base aqueuse, comprenant un ou plusieurs liants diluàbles dans l'eau et un ou plusieurs polyisocyanates ayant des groupes isocyanate libres ou bloqués, le nombre hydroxy du corps solide de liant dans l'agent de revêtement de peinture de base étant de 10 à 300 mg de KOH/g et le rapport du nombre de groupes NCO libres ou bloqués sur le nombre de groupes hydroxy provenant du corps solide de liant étant supérieur à 0,5 : 1 et inférieur à 5 : 1, et **en ce que** l'on dépose une deuxième couche de peinture à effets avec une peinture de base aqueuse avant le dépôt de la couche de vernis, cette peinture de base aqueuse correspondant à la peinture de base aqueuse utilisée pour la réalisation de la première couche de base à effets, cependant exempte de polyisocyanates libres ou bloqués.

2. Procédé selon la revendication 1, **caractérisé en ce que** la peinture de base aqueuse donne un effet et une couleur.

3. Procédé selon la revendication 1 ou 2, **caractérisé en ce que** pour former les couches d'apprêt, on met en oeuvre une peinture électrophorétique cathodique avec des liants avec des groupes cationiques en fonction d'un nombre d'amine compris entre 20 et 250 mg KOH/g et une masse molaire moyenne en poids (Mw) comprise entre 300 et 10000.

4. Procédé selon l'une quelconque des revendications 1 à 3, **caractérisé en ce que** les couches de peinture et de vernis sont cuites conjointement.

5. Procédé selon l'une quelconque des revendications 1 à 4, **caractérisé en ce que** l'on utilise comme liant aqueux pour la peinture de base aqueuse un liant stabilisé anioniquement.

6. Procédé selon l'une quelconque des revendications 1 à 5, **caractérisé en ce que** l'on utilise un agent de revêtement de peinture de base aqueux qui comprend un ou plusieurs diluants réactifs à groupements fonctionnels hydroxy en une quantité allant de 1 à 20 % en poids sur le corps solide du liant.

7. Procédé selon la revendication 6, **caractérisé en ce que** l'on utilise un diluant réactif qui présente une masse molaire moyenne en nombre (Mn) comprise entre 62 et 500 et une fonctionnalité OH d'au moins 2.

8. Procédé selon l'une des revendications précédentes, **caractérisé en ce que** l'on utilise dans l'agent de revêtement de base aqueux un ou plusieurs réticulants supplémentaires, différents des polyisocyanates.

9. Procédé selon l'une quelconque des revendications précédentes, **caractérisé en que** la première couche de peinture de base aqueuse est déposée en une épaisseur de film sèche comprise entre 10 et 30 µm et la deuxième couche de peinture à effets en une épaisseur de film sèche comprise entre 7 et 20 µm.

10. Procédé selon l'une quelconque des revendications précédentes, **caractérisé en que** la couche de vernis est déposée en une épaisseur de film sèche comprise entre 30 et 80 µm.

11. Procédé selon l'une quelconque des revendications précédentes, **caractérisé en que** la couche de vernis est élaborée en utilisant un vernis liquide ou un vernis pulvérulent.
